# EUROPEAN PATENT APPLICATION

(11) **EP 1 256 377 A1**
(43) Date of publication of application: **13.11.2002**
(21) Application number: 01201739.8
(22) Date of filing: 11.05.2001
(51) Int. Cl.: B01J 19/00, G01N 31/10

(54) **Apparatus, suitable for high throughput experimentation**

(71) Applicant: Avantium International B.V., 1014 BV Amsterdam (NL)
(72) Inventor: Bracht, Maarten, 1019 XD Amsterdam (NL)
(74) Representative: Bakkum, Ruben Joseph

(57) **Abstract**

Apparatus suitable for high throughput experimentation, comprising an assembly (1) for housing at least one vessel (2) having a first and second vessel opening (3, 4), the assembly (1) comprising:
- a base block (5) having at least one through going first channel (6) for removably housing the vessel (2), having a first channel opening (19), opening in a first face (7) of the block, and a second channel opening (18), opening in a second face (8) of the block (5);
- a cover element (9) with the bottom surface (10) facing the base block (5) being releasably attached to the first face (7) thereof;
- a first sealing element (11) between the first face (7) of the base block (5) and the bottom surface (10) of the cover element (9), being placed such that it seals gastight around said first channel opening (19) between the cover element (9) and the base block (5); and
- a second sealing element (12) located in the first channel (6) around the vessel (2), sealing gastight against the inside of the first channel (6) and the outside of the vessel (2).

## Description

The present invention relates to an apparatus, in particular suitable for high throughput experimentation. Apparatuses for high throughput experimentation ("HTE") are known and are used for simultaneously conducting a large number of experiments using a plurality of vessels, optionally with different reaction conditions. High throughput experimentation is used for instance in the pharmaceutical industry for the discovery and development of new and useful drugs and in the field of catalysts for the development of new catalysts (see e.g. Angew. Chem. Int. Ed. 1999, 38, No.18, pp 2794-2803).

A problem that is encountered with known high throughput experimentation apparatuses is that the individual vessels have to be sealed one by one. This results in an ineffective way of working and thus in a considerable loss of time.

Therefore it is an object of the present invention to provide an alternative and easier way to seal vessels. It is a further object of the present invention to provide an apparatus for high throughput experimentation in which a plurality of vessels can be sealed simultaneously.

The above and other objects can be achieved by the apparatus according to the present invention comprising an assembly for housing at least one vessel having a first vessel opening and second vessel opening, the assembly comprising:
- a base block having at least one through going first channel formed therein for removably housing the vessel, said first channel having a first channel opening, opening in a first face of the block, and a second channel opening, opening in a second face of the block;
- a cover element having a bottom surface, the cover element with the bottom surface facing the base block being releasably attached to the first face of the base block;
- a first sealing element between the first face of the base block and the bottom surface of the cover element, the first sealing element being placed, such that said sealing element surrounds the first channel opening completely, and thereby sealing gastight around said first channel opening between the cover element and the base block; and
- a second sealing element located in the first channel around the vessel, said second sealing element sealing gastight against the inside of the first channel and the outside the vessel.

Using the apparatus according to the present invention a plurality of vessels housed in a base block can be sealed simultaneously and in a very easy manner by attaching the cover element to the base block housing the vessels, whereby all vessels are sealed in a gastight manner.

The apparatus according to the present invention is not limited to a specific field of application, but may be used for all applications in which an easy and gastight sealing of at least one vessel is desired. The apparatus according to the present invention provides a very fast and effective sealing of different vessels, even in conditions of high temperature and high pressure.

The vessels and channels of the apparatus according to the present invention are described herein as having first and second openings, opening in certain faces of the base block. The person skilled in the art will readily understand that these first and second openings may be inlets or outlets, depending on in which direction a fluid to be used flows. Usually, the first openings are inlets and the second openings outlets. For simplicity reasons, the first openings and second openings will be denoted as inlets and outlets respectively, throughout the description.

Furthermore, the person skilled in the art will readily understand that the first face and second face can be one and the same, i.e. the through going first channel may have both its inlet and outlet in the first face of the base block.

The first and second sealing elements used in the apparatus according to the present invention may be O-rings. Such O-rings are not limited to a substantially circular cross-sectional form, but can have any suitable form for sealing, as will be well understood by a person skilled in the art. Further, the O-rings can be made from any suitable material, such as metal or an elastomer. Instead of O-rings, the sealing elements may have any other suitable form known to the person skilled in the art. For example, multiple layers of tape or V-shaped metal rings may also be used.

According to a preferred embodiment of the apparatus according to the present invention, the first sealing element is made from a high pressure resistant material, while the second sealing element is made from a resilient material such as rubber. Hereby, a very easy and gastight sealing can be obtained.

The selection of material of the sealing element also depends on the temperatures used in the base block. Usually, the temperature nearby the first face of the base block has a value allowing the sealing elements to be made from a resilient, elastomeric material.

The first and second faces of the base block and the bottom surface of the cover element may have any suitable form, as long as, in attached condition of the base block and cover element, a sufficient sealing of the vessels is obtained.

According to a preferred embodiment of the apparatus according to the invention, both or any of the first face of the base block and the bottom surface of the cover element are substantially planar.

Hereby, a very easy and very effective gastight sealing of the vessels can be obtained.

As mentioned above and as will be illustrated more clearly in the drawings hereinafter, the second sealing element is placed in the first channel of the base block and around the vessel placed in the base block. According to a preferred embodiment of the present invention, the second sealing element is located in the vicinity of the first face of the base block. Hereby it is ensured that the fluid, which is fed into the inlet of the vessel, will be maintained under substantially the same conditions. Furthermore, the occurrence of dead volume can be avoided.

According to an advantageous embodiment, the base block comprises at least one second channel, opening into the at least one first channel of the base block, between the second sealing element and the first channel opening.

Hereby a fluid can be easily fed to (or removed from) the first channel opening.

It is preferred that the cover element comprises at least one third channel in fluid communication with the at least one first channel in the base block. Hereby feeding of the individual vessels can be provided for, while the contents of the individual vessels are isolated from the contents of any other vessel contained in the base block.

Further it is preferred that the base block comprises at least one purging channel opening into the at least one first channel of the base block, between the second sealing element and the second channel opening. Hereby at least one of the purging channels can be brought in fluid communication with the second vessel opening, and the purging channel can be brought in fluid communication with a pressurised source of an inert fluid such as N₂. Hereby a product gas obtained by treatment in the vessel can be prevented from condensing by diluting said product gas by use of the inert fluid. Furthermore, the treatment process using the apparatus as a whole can be accelerated as the product gas is more efficiently obtained.

The person skilled in the art will readily understand that further feeding channels, sealing elements, etc. may be provided.

Finally, the present invention relates to an assembly as described in the apparatus according to the present invention.

Hereinafter, the present invention will be illustrated in more detail by a drawing. Herein shows:
Figure 1 a schematic cross-sectional view of the apparatus according to the present invention in non-attached condition;
Figure 2 a schematic cross-sectional view of an alternative apparatus according to the present invention in attached condition; and
Figure 3 a schematic cross-sectional view of a further alternative apparatus according to the present invention in attached condition.

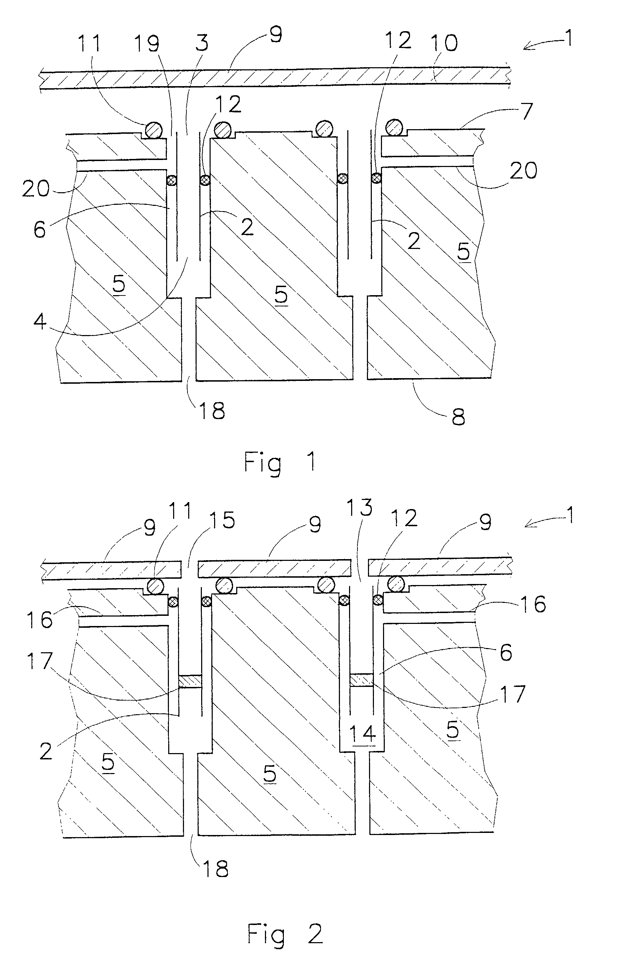

In figure 1 a schematic cross-sectional view of the apparatus according to the present invention is shown in non-attached condition. The apparatus comprises an assembly 1 for housing a plurality of vessels 2 having a first vessel opening (inlet 3) and a second vessel opening (outlet 4). The vessels 2 may be any conventional vessel. The assembly 1 comprises a base block 5 and a cover element 9. The base block 5 comprises a plurality of through going first channels 6 formed therein for removably housing the vessels 2. The first channels 6 have a first channel opening (inlet 19), opening in a first face 7 of the block 5 and a second channel opening (outlet 18), opening in a second face 8 of the block 5. If desired, both the inlet 19 and the outlet 18 may open into the first face 7 of the block 5. In the shown embodiment the first face 7 of the base block 5 is facing towards the cover element 9. The cover element 9 is releasably attachable on the first face 7 of the base block 5. There may be means provided, such as screws, to ensure attachment of the cover element 9 on the base block 5.

Between the first face 7 of the base block 5 and the bottom surface 10 of the cover element 9, a number of high pressure resistant O-rings 11 are provided as first sealing elements. These O-rings 11 are placed, in attached condition of the base block 5 on cover element 9 (see figure 2), such that the O-ring 11 is near the inlet 19 of the first channel 6 and surrounds this inlet 19, and that the vessel 2 placed in the first channel 6 formed in the base block 5 can be sealed to prevent fluid communication between said vessel 2 and any other vessel 2 in the space between the base block 5 and the cover element 9 (this space is denoted with zone 13 in figure 2). As is shown, annular grooves are provided in the first face 7 of block 5 for partial incorporation of the O-ring 11. This also prevents moving of the O-rings 11 in case of a horizontal movement of the cover element 9. Alternatively, the annular grooves may be provided in the bottom surface 10 of the cover element 9.

The assembly 1 is further provided with resilient O-rings 12 as second sealing elements which are placed in the first channels 6 of the base block 5 and around the vessel 2. The O-ring 12 is placed such that that part of the first channel 6 in the base block 5 being outside the vessel 2 is divided into two zones 13, 14 and that the two zones 13, 14 in the channel 6 are sealed from each other in a gastight manner to prevent fluid communication via the sealing element 12 between them. Of course, fluid communication may take place between zone 13 and 14 via the reaction zone 17. In the shown embodiment in figure 2 the two zones 13, 14 are, when the cover element 9 is attached to the base block 5, on the one hand the space 14 in the channel 6 outside the vessel 2 under the O-ring 12, and on the other hand the space 13 between the cover element 9 and base block 5 sealed by the O-ring 11 and O-ring 12.

In the shown embodiment of figure 1, a very easy and simultaneously sealing of the vessels 2 can be obtained by attaching the cover element 9 to the base block 5.

The first and second sealing elements 11, 12 may have any suitable form, as long as a sufficient sealing is obtained. For example the first sealing element 11 may be made of a high pressure resilient (and, if desired, heat resistant) material such as a rubber, but may also be made of the same material as the base block 5 and cover element 9 (in general a metal). The person skilled in the art will understand that the sealing element 11 may form part of the base block 5 or the cover element 9.

The second sealing element 12 will usually be made of a resilient, elastomeric material such as for example rubber.

Figure 1 is incorporated to illustrate the sealing of the inlets 3 of the vessels 2 housed in the base block 3, by attaching the cover element 9 to the base block 5.

Second channels 20 are provided for feeding a fluid to the inlet 3 of the vessels 2. The person skilled in the art will understand that also for example the through going third channels 15 as shown in Figure 2 can be used for feeding a fluid or a combination of both the second and third channels 20, 15. In practice usually second channels 20 are used for feeding gaseous products whereas third channels 15 are used for feeding liquid products. For the feeding of a liquid for instance a capillary may be used, which may be partially inserted in the through going third channel 15, shown in Figure 2.

The channels 20 and 15 can also be used for removing substances from the vessels 2.

Figure 2 shows a schematic cross-sectional view of an alternative embodiment of the apparatus shown in figure 1, in attached condition of the cover element 9 to the base block 5.

Shown is an assembly 1 comprising a base block 5 for housing a plurality of vessels 2 and a cover element 9. The base block 5 is provided with through going first channels 6, while the cover element 9 is provided with through going third channels 15. The assembly 1 also contains O-rings 11 and O-rings 12. The vessels 2 contain a reaction zone 17, for example containing a catalyst. The base block 5 according to the embodiment shown in figure 2 comprises purging channels 16 opening into zone 14, i.e. the space in channel 6 outside the vessel 2 and below the second O-ring 12. With 18 the outlet of channel 6 is denoted. The purging inlet 16 may be in fluid communication with a pressurised source of an inert fluid such as N₂.

In use of the assembly 1 shown in figure 2, a fluid to be treated will be fed via third channel 15 to the inlet 3 of the vessel 2 in the channel 6 of the base block 5. This third channel 15 will of course usually be provided with further sealing means or valves to prevent the fed fluid from returning to the third channel 15. After passing the reactor zone 17 the treated fluid will accumulate in the zone 14.

To prevent condensing of the product obtained in the reactor zone 17, if a gaseous product is obtained, an inert gas such as N₂ will be fed by purging channel 16 to force the obtained product through the outlet 18 of channel 6. Herewith a very easy diluting of the product gas is obtained and condensing is prevented.

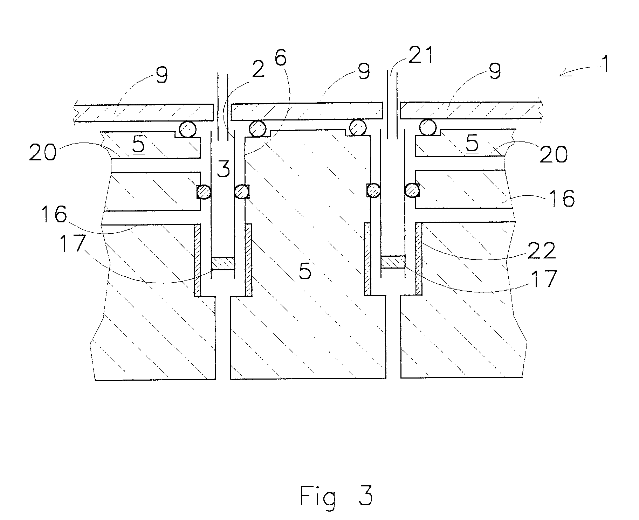

Figure 3 shows a schematic cross-sectional view of a further alternative embodiment of the apparatus according to the present invention.

Shown is an assembly 1 comprising a base block 5 for housing a plurality of vessels 2 and a cover element 9, similarly to Figure 2. The base block has purging channels 16, and second channels 20 for feeding a fluid to the inlet 3 of the vessel 2.

In this embodiment the sealing elements 12 are not placed in the direct vicinity of the first face 7, but somewhat lower. The sealing elements 12 are partially incorporated in the wall of the channel 6, to prevent movement of the sealing elements 12 when the vessel 2 is inserted or removed.

Furthermore, the assembly 1 contains a liquid feed channel 21, such as a capillary, for dosing a liquid in the inlet 3 of the vessel 2. The wall of the channel 6 is provided with heating means 22 for locally heating the vessel 2, in particular the reactor zone 17.

In the embodiment shown in Figure 3, the reactor block 5 provides for such a heating that only the reactor zone 17 will be significantly heated, while other parts of the assembly may be maintained at a lower temperature. Usually the heating means 22 are constructed such that the sealing elements 12 are allowed to be made from an elastomeric material, without being degraded by the heat generated by the heating means 22.

The person skilled in the art will understand that many modifications can be made. For instance, the assembly 1 may be provided with further heating means for obtaining a specific temperature in certain parts of the block 5. Also, flow rate regulating elements, such as capillaries may be incorporated in the vessels 2. Further, the person skilled in the art will understand that the invention is not limited to an embodiment wherein the cover element 9 lies upon the base block 5; the assembly 1 may also be configured such that the cover element 9 is positioned under or next to the base block 5. Further, the base block 5 may be in the form an array, i.e. comprising several rows of parallel through going channels 6.

As will be clear from the above, the apparatus according to the present invention provides for a very easy and simultaneous sealing of at least one, but usually pluralities of vessels.

As is mentioned above, the openings described as "inlet" may also function as outlet, depending on the flow direction of the fluid. This also applies for "outlet" which may, when desired and appropriate, function as inlet.

## Claims

1. Apparatus, in particular suitable for high throughput experimentation, comprising an assembly (1) for housing at least one vessel (2) having a first vessel opening (3) and an second vessel opening (4), the assembly (1) comprising:
- a base block (5) having at least one through going first channel (6) formed therein for removably housing the vessel (2), said first channel (6) having a first channel opening (19), opening in a first face (7) of the block, and a second channel opening (18), opening in a second face (8) of the block (5);
- a cover element (9) having a bottom surface (10), the cover element (9) with the bottom surface (10) facing the base block (5) being releasably attached to the first face (7) of the base block (5);
- a first sealing element (11) between the first face (7) of the base block (5) and the bottom surface (10) of the cover element (9), the first sealing element (11) being placed, such that said sealing element (11) surrounds the first channel opening (19) completely, and thereby sealing gastight around said first channel opening (19) between the cover element (9) and the base block (5); and
- a second sealing element (12) located in the first channel (6) around the vessel (2), said second sealing element (12) sealing gastight against the inside of the first channel (6) and the outside of the vessel (2).

2. Apparatus according to claim 1, wherein the first face (7) of the base block (5) and the bottom surface (10) of the cover element (9) are substantially planar.

3. Apparatus according to claim 1 or 2, wherein the second sealing element (12) is located in the vicinity of the first face (7) of the base block (5).

4. Apparatus according to any of the preceding claims, wherein the base block (5) comprises at least one second channel (20), opening into the at least one first channel (6) of the base block (5), between the second sealing element (12) and the first channel opening (19).

5. Apparatus according to any of the preceding claims, wherein the cover element (10) comprises at least one third channel (15), in fluid communication with the at least one first channel (6) in the base block (5).

6. Apparatus according to any of the preceding claims, wherein the base block (5) comprises at least one purging channel (16), opening into the at least one first channel (6) of the base block (5), between the second sealing element (12) and the second channel opening (18).

7. Assembly as described in any of the preceding claims.
